# EUROPEAN PATENT APPLICATION

(11) **EP 4 654 706 A1**
(43) Date of publication of application: **26.11.2025**
(21) Application number: 23916813.1
(22) Date of filing: 19.01.2023
(51) Int. Cl.: H04W 72/0446, H04W 24/10

(54) **METHOD AND APPARATUS FOR TRANSMITTING INDICATION INFORMATION, AND READABLE STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Dehns Germany Partnerschaft mbB
(86) International application number: PCT/CN2023/073264
(87) International publication number: WO 2024/152334

(57) **Abstract**

Provided in the present disclosure are a method and apparatus for transmitting indication information, and a readable storage medium. The method comprises: sending indication information to a network device, wherein the indication information comprises a first priority of a first-type measurement gap, the first priority being used for the network device to determine a second priority of the first-type measurement gap, and the first-type measurement gap being used for the measurement of a second network in a MUSIM scenario. In the method of the present disclosure, a user equipment sends indication information to a network device, so as to report a first priority of a first-type measurement gap that the user equipment prefers, such that after receiving the indication information, the network device can rationally configure a measurement gap in view of the indication information, which is conducive to performing effective measurement in a scenario involving a collision between different measurement gaps.

## Description

### TECHNICAL FIELD

The present disclosure relates to the field of wireless communication technology, and in particular to a method, an apparatus for transmitting indication information and a readable storage medium.

### BACKGROUND

User equipment (UE) supporting multi-universal subscriber identity modules (Multi-SIM or MUSIM) supports a plurality of card slots and can be connected to a plurality of networks at the same time. In the 3rd Generation Partnership Project (3GPP), it is indicated that the MUSIM user equipment can support a plurality of networks (NW) at the same time, for example, supporting NW A and NW B at the same time. NW A is a New Radio (NR) network, and NW B is an NR network or a Long Term Evolution (LTE) network.

3GPP also introduces configuring one or more measurement gaps for NW A for MUSIM measurement purposes, to achieve measurement of NW B. The measurement gap (MG) for MUSIM measurement may conflict with the measurement gap for NW A measurement.

### SUMMARY

The present disclosure provides a method, an apparatus for transmitting indication information and a readable storage medium.

In a first aspect, the present disclosure provides a method for sending indication information, performed by a user equipment supporting a multi-universal subscriber identity module MUSIM, the method including:
sending indication information to a network device, wherein the indication information includes a first priority of a first type of measurement gaps, the first priority is used by the network device to determine a second priority of the first type of measurement gaps, the first type of measurement gaps is used for the measurement of a second network in an MUSIM scenario.

In the method of the present disclosure, the user equipment sends indication information to the network device and reports the first priority of the first type of measurement gaps preferred by the user equipment itself. Therefore, after receiving the indication information, the network device can perform reasonable measurement gap configuration in combination with the indication information, which is conducive to effective measurement in scenarios where different measurement gaps conflict.

In some possible implementations, sending indication information to a network device includes:
sending a radio resource control RRC message to the network device, wherein the RRC message includes the indication information.

In some possible implementations, the RRC message includes a first field for indicating the indication information.

In some possible implementations, the indication information includes: in one or more of the first type of measurement gaps, the first priority of each of the first type of measurement gaps.

In some possible implementations, the indication information includes: in one or more of the first type of measurement gaps and one or more of a second type of measurement gaps, the first priority of each of the first type of measurement gaps;
wherein the second type of measurement gaps is used for measurement purposes under a first network.

In some possible implementations, the method further includes:
receiving first configuration information sent by the network device, wherein the first configuration information includes the one or more of the second type of measurement gaps and a third priority of the one or more of the second type of measurement gaps, wherein the first configuration information is used by the user equipment to determine the indication information.

In some possible implementations, the method further includes:
receiving second configuration information sent by the network device, wherein the second configuration information includes the second priority of the first type of measurement gaps, wherein the second configuration information is determined by the network device according to the indication information.

In some possible implementations, the method further includes:
performing measurement of the second network according to the second configuration information.

In a second aspect, the present disclosure provides a method for receiving indication information, performed by a network device, and the method includes:
receiving indication information sent by a user equipment supporting MUSIM, wherein the indication information includes a first priority of a first type of measurement gaps, the first type of measurement gaps is used for the measurement of a second network in an MUSIM scenario;
determining second configuration information according to the indication information, wherein the second configuration information includes a second priority of the first type of measurement gaps.

In the method of the present disclosure, the network device receives at least information sent by the user equipment to learn the first priority of the first type of measurement gaps preferred by the user equipment. Thus, the network device can perform reasonable measurement gap configuration according to the indication information, which is conducive to effective measurement in scenarios where different measurement gaps conflict.

In some possible implementations, receiving indication information sent by a user equipment supporting MUSIM includes:
receiving an RRC message sent by the user equipment, and determining the indication information according to a first field in the RRC message.

In some possible implementations, the second configuration information includes: in one or more of the first type of measurement gaps, the second priority of each of the first type of measurement gaps.

In some possible implementations, the second configuration information includes: in one or more of the first type of measurement gaps and one or more of a second type of measurement gaps, the second priority of each of the first type of measurement gaps.

In some possible implementations, the method further includes:
sending first configuration information to the user equipment, wherein the first configuration information includes the one or more of the second type of measurement gaps and a third priority corresponding to the plurality of the second type of measurement gaps, the second type of measurement gaps is used for measurement purposes under a first network.

In some possible implementations, the method further includes:
sending the second configuration information to the user equipment.

In a third aspect, the present disclosure provides an apparatus for sending indication information, which can be used to execute the steps performed by the user equipment in the above-mentioned first aspect or any possible design of the first aspect. The user equipment can implement each function in the above-mentioned methods in the form of a hardware structure, a software module, or a hardware structure in combination with a software module.

When the apparatus shown in the second aspect is implemented by a software module, the apparatus may include a transceiver module, wherein the transceiver module can be used to support the communication apparatus to communicate.

When executing the steps described in the above-mentioned first aspect, the transceiver module is configured to send indication information to a network device, wherein the indication information includes a first priority of a first type of measurement gaps, the first priority is used by the network device to determine a second priority of the first type of measurement gaps, the first type of measurement gaps is used for the measurement of a second network in an MUSIM scenario.

In a fourth aspect, the present disclosure provides an apparatus for receiving indication information, which can be used to execute the steps performed by a network device in the second aspect or any possible design of the second aspect. The network device can implement each function in the above methods in the form of a hardware structure, a software module, or a hardware structure in combination with a software module.

When the apparatus shown in the fourth aspect is implemented by a software module, the apparatus may include a transceiver module and a processing module that are mutually coupled, wherein the transceiver module can be used to support the communication apparatus to communicate, and the processing module can be used for the communication apparatus to perform processing operations, such as generating information/messages that need(s) to be sent, or processing received signals to obtain information/messages.

When executing the steps described in the second aspect, the transceiver module is configured to receive indication information sent by a user equipment supporting MUSIM, wherein the indication information includes a first priority of a first type of measurement gaps, the first type of measurement gaps is used for the measurement of a second network in an MUSIM scenario.

The processing module is configured to determine second configuration information according to the indication information, wherein the second configuration information includes a second priority of the first type of measurement gaps.

In a fifth aspect, the present disclosure provides a user equipment, including a processor and a memory; the memory is used for storing a computer program; the processor is used to execute the computer program to implement the first aspect or any possible design of the first aspect.

In a sixth aspect, the present disclosure provides a network device, including a processor and a memory; the memory is used for storing a computer program; the processor is used to execute the computer program to implement the second aspect or any possible design of the second aspect.

In a seventh aspect, the present disclosure provides a computer-readable storage medium, instructions (or computer programs, programs) are stored in the computer-readable storage medium, the instructions (or computer programs, programs) cause a computer to execute the above first aspect or any possible design of the first aspect when invoked and executed on a computer.

In an eighth aspect, the present disclosure provides a computer-readable storage medium, instructions (or computer programs, programs) are stored in the computer-readable storage medium, the instructions (or computer programs, programs) cause a computer to execute the above second aspect or any possible design of the second aspect when invoked and executed on a computer.

It should be understood that the above general description and the detailed description below are only exemplary and explanatory, and cannot limit the present disclosure.

### BRIEF DESCRIPTION OF THE DRAWINGS

The drawings described herein are used to provide further understanding of the embodiments of the present disclosure and constitute a part of the present disclosure. The schematic embodiments of the embodiments of the present disclosure and their descriptions are used to explain the embodiments of the present disclosure and do not constitute improper limitations on the embodiments of the present disclosure. In the drawings:
The drawings herein are incorporated into the specification and constitute a part of the specification, showing embodiments consistent with embodiments of the present disclosure, and are used together with the specification to explain the principles of embodiments of the present disclosure.
FIG. 1 is a schematic diagram of a wireless communication system architecture provided by an embodiment of the present disclosure;
FIG. 2 is a flow chart of a method for transmitting indication information according to an example embodiment;
FIG. 3 is a flow chart of a method for sending indication information according to an example embodiment;
FIG. 4 is a schematic diagram of a method for sending indication information according to an example embodiment;
FIG. 5 is a schematic diagram of a method for sending indication information according to another example embodiment;
FIG. 6 is a schematic diagram of a method for sending indication information according to another example embodiment;
FIG. 7 is a flow chart of a method for receiving indication information according to an example embodiment;
FIG. 8 is a block diagram of an apparatus for sending indication information according to an example embodiment;
FIG. 9 is a block diagram of a user equipment according to an example embodiment;
FIG. 10 is a block diagram of an apparatus for receiving indication information according to an example embodiment;
FIG. 11 is a block diagram of a communication apparatus according to an example embodiment.

### DETAILED DESCRIPTION

The embodiments of the present disclosure are now further described in conjunction with the drawings and specific implementations.

The example embodiments will be described in detail here, and examples thereof are shown in the accompanying drawings. When the following description refers to the drawings, unless otherwise indicated, the same numbers in different drawings represent the same or similar elements. The implementations described in the following example embodiments do not represent all implementations consistent with embodiments of the present disclosure. Instead, they are only examples of apparatus and methods consistent with some aspects of the present disclosure as detailed in the attached claims.

The terms used in the embodiments of the present disclosure are only for the purpose of describing specific embodiments and are not intended to limit the embodiments of the present disclosure. The singular forms "one" and "the" used in the embodiments of the present disclosure and the attached claims are also intended to include plural forms, unless the context clearly indicates other meanings. It should also be understood that the term "and/or" used herein refers to and includes any or all possible combinations of one or more associated listed items.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if" and "in a case that" as used herein may be interpreted as "at..." or "when..." or "in response to determining that".

The embodiments of the present disclosure are described in detail below, and examples of the embodiments are shown in the accompanying drawings, wherein the same or similar reference numerals throughout represent the same or similar elements. The embodiments described below with reference to the accompanying drawings are examples and are intended to be used to explain the present disclosure, and cannot be understood as limiting the present disclosure.

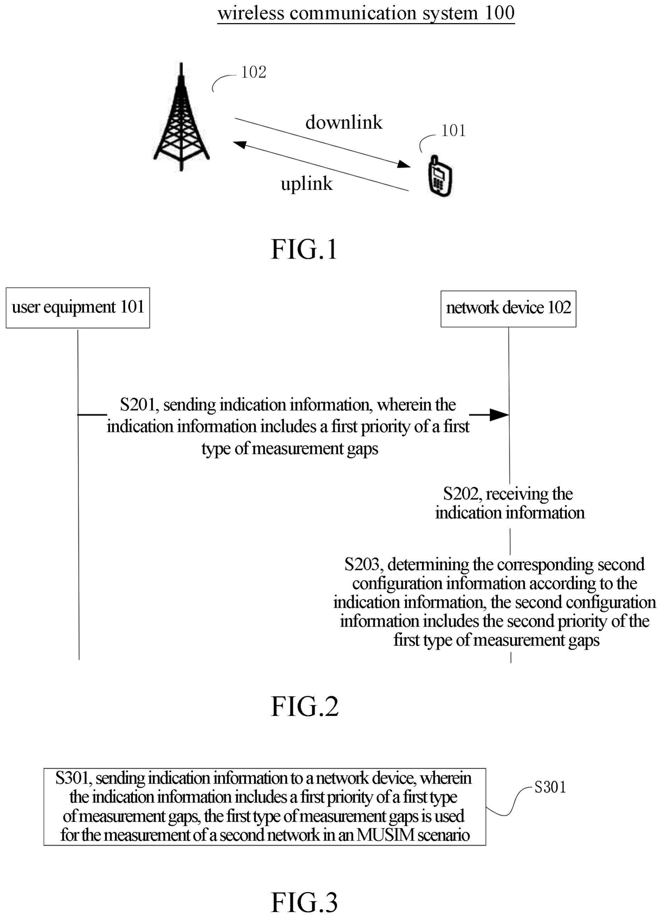

As shown in FIG. 1, a method for transmitting indication information provided by an embodiment of the present disclosure may be applied to a wireless communication system 100, which may include a user equipment 101 and a network device 102. The user equipment 101 is configured to support carrier aggregation and may be connected to a plurality of carrier units of the network device 102, including a main carrier unit and one or more auxiliary carrier units.

It should be understood that, the above wireless communication system 100 may be applied to both low-frequency scenarios and high-frequency scenarios. The application scenarios of the wireless communication system 100 include but are not limited to the long term evolution (LTE) system, the LTE frequency division duplex (FDD) system, the LTE time division duplex (TDD) system, the worldwide interoperability for micro wave access (WiMAX) communication system, the cloud radio access network (CRAN) system, the future fifth generation (5G) system, the new radio (NR) communication system or the future evolved public land mobile network (PLMN) system, etc.

The user equipment 101 shown above can be a terminal, an access terminal, a terminal unit, a terminal station, a mobile station (MS), a remote station, a remote terminal, a mobile terminal, a wireless communication device, a terminal agent or a terminal device, etc. The user equipment 101 can have a wireless transceiver function, which can communicate (such as wireless communication) with one or more network devices of one or more communication systems and receive network services provided by the network devices, where the network devices include but are not limited to the illustrated network device 102.

The user equipment (UE) 101 can be a cellular phone, a cordless phone, a session initiation protocol (SIP) phone, a wireless local loop (WLL) station, a personal digital assistant (PDA) device, a handheld device with wireless communication functions, a computing device or other processing devices connected to a wireless modem, a vehicle-mounted device, a wearable device, a terminal device in a future 5G network, or a terminal device in a future evolved PLMN network, etc.

The network device 102 can be an access network device (or access network point). The access network device refers to a device that provides the network access function, such as a radio access network (RAN) base station, etc. The network device 102 can specifically include a base station (BS), or include a base station and a wireless resource management device for controlling the base station, etc. The network device 102 can also include a relay station (relay device), an access point, a base station in a future 5G network, a base station in a future evolved PLMN network, or an NR base station, etc. The network device 102 can be a wearable device or a vehicle-mounted device. The network device 102 may also be a communication chip with a communication module.

For example, the network device 102 includes but is not limited to: a next generation base station (gnodeB, gNB) in 5G, an evolved node B (eNB) in an LTE system, a radio network controller (RNC), a node B (NB) in a WCDMA system, a wireless controller under a CRAN system, a base station controller (BSC), a base transceiver station (BTS) in a GSM system or a CDMA system, a home base station (for example, home evolved nodeB, or home node B, HNB), a baseband unit (BBU), a transmitting and receiving point (TRP), a transmitting point (TP) or a mobile switching center, etc.

It can be understood that the network device 102 may also include a core network device, etc., and the embodiment of the present application does not specifically limit the network device 102.

The embodiment of the present disclosure provides a method for transmitting indication information. Referring to FIG. 2, FIG. 2 is a method for transmitting indication information according to an example embodiment. As shown in FIG. 2, the method includes steps S201 to S203. Specifically:
step S201, the user equipment 101 sends indication information to a network device 102, wherein the indication information includes a first priority of a first type of measurement gaps (i.e., first-type measurement gap), the first priority is used by the network device 102 to determine a second priority of the first type of measurement gaps, the first type of measurement gaps is used for the measurement of a second network in an MUSIM scenario.

In some possible implementations, the network device 102 corresponds to the first network, that is, network A (NW A). The second network is, for example, network B (NW B).

In an example, the first network is an NR network, and the second network is an NR network or a LTE network.

In some possible implementations, the user equipment 101 is a UE supporting MUSIM, and the user equipment 101 may have different transceiver capabilities. For a single TX/single RX or single TX/single RX user equipment 101, since it only supports 1TX capability, the user equipment 101 cannot maintain the connection of both NW A and NW B at the same time.

For example, the user equipment 101 is in a Radio Resource Control (RRC) connected state (RRC-Connected) in the first network, i.e., NW A, and is in an RRC idle state (RRC-Idle) or RRC inactive state (RRC-Inactive) in the second network, i.e., NW B.

In some possible implementations, the indication information reported by the user equipment 101 is the priority of the first type of measurement gaps that the user equipment 101 prefers or expects, that is, the first priority is used to indicate the priority preferred or expected by the user equipment 101. It can be understood that this term is only used to distinguish from the second priority configured by the network device 102, rather than to limit the wording.

In one example, the user equipment 101 is in an RRC connected state under the first network, and the first type of measurement gaps is used to measure the second network under the MUSIM scenario. Therefore, for the convenience of description, the first type of measurement gaps in the embodiment of the present disclosure can also be referred to as MUSIM Gap.

Step S202, the network device 102 receives the indication information.

In some possible implementations, after receiving the indication information, the network device 102 can demodulate the corresponding information, to obtain the first priority of the MUSIM Gap directly or implicitly indicated.

Step S203, the network device 102 determines the second configuration information according to the indication information, and the second configuration information includes the second priority of the first type of measurement gaps.

In some possible implementations, the network device 102 determines the second configuration information according to the first priority corresponding to the MUSIM Gap preferred by the user equipment 101.

In some possible implementations, the second priority of the MUSIM Gap configured in the second configuration information determined by the network device 102 may be the same as or different from the first priority of the MUSIM Gap preferred by the user equipment 101.

In one example, the network device 102 can determine the second configuration information by comprehensive decision based on the first priority and the second type of measurement gaps (MG) under the first network. The second type of measurement gaps (i.e., second-type measurement gap) can be used for the measurement of the cell under the first network, such as the mobility measurement of the neighboring cell.

In some possible implementations, the network device 102 can at most configure three periodic MUSIM Gaps and one non-periodic MUSIM gap at the same time.

In an embodiment of the present disclosure, the user equipment 101 sends indication information to the network device 102, to report the first priority of the first type of measurement gaps preferred by the user equipment itself. After receiving the indication information, the network device 102 can perform reasonable measurement gap configuration in combination with the indication information, indicating the priorities of different measurement gaps, thus, in the scenario where different measurement gaps conflict, the UE can also perform effective measurement in combination with the priority of the measurement gap.

The embodiment of the present disclosure provides a method for sending indication information, which is performed by the user equipment 101 supporting MUSIM. Referring to FIG. 3, FIG. 3 is a method for sending indication information according to an example embodiment. As shown in FIG. 3, the method includes step S301, specifically:

step S301, the user equipment 101 sends indication information to a network device 102, wherein the indication information includes a first priority of a first type of measurement gaps, the first priority is used by the network device to determine a second priority of the first type of measurement gaps, the first type of measurement gaps is used for the measurement of a second network in an MUSIM scenario.

In some possible implementations, the network device 102 corresponds to the first network, that is, network A (NW A). The second network is, for example, network B (NW B).

In some possible implementations, the user equipment 101 may support 1TX capability, user equipment 101 is in RRC connected state in the first network, i.e., NW A, and is in RRC idle state or RRC inactive state in the second network, i.e., NW B.

In some possible implementations, the indication information reported by user equipment 101 is the first priority of the first type of measurement gaps (MUSIM Gap) preferred by the user equipment itself.

In an embodiment of the present disclosure, the user equipment 101 sends indication information to the network device 102, to report the first priority of the first type of measurement gaps preferred by the user equipment. Thus, after receiving the indication information, the network device 102 can perform reasonable measurement gap configuration in combination with the indication information, which is conducive to performing effective measurement in scenarios where different measurement gaps conflict.

The embodiment of the present disclosure provides a method for sending indication information, which is performed by the user equipment 101 supporting MUSIM. The method includes step S301', specifically:
step S301', the user equipment 101 sends an RRC message to the network device 102, and the RRC message includes indication information. The indication information includes the first priority of the first type of measurement gaps, and the first priority is used by the network device to determine the second priority of the first type of measurement gaps, and the first type of measurement gaps is used for the measurement of the second network in the MUSIM scenario.

In some possible implementations, the RRC message may indicate the indication information by direct indication or implicit indication, such as indicating the first priority of the MUSIM Gap preferred by the user equipment 101.

In some possible implementations, the user equipment 101 may use the assistance information (UE Assistance Information, UAI) in the RRC message, to report the indication information.

In one example, the user equipment 101 uses the newly added field in the UAI to report the first priority.

In one example, the user equipment 101 reports the first priority by using the original field introduced by R17 in the RRC message, that is, adding the original field in the UAI. It can be understood that in this example, the original field introduced by R17 corresponds to: the field indicated by the network device 102 side through the RRC message; the user equipment 101, according to the original field indicated by the network device 102, uses the same original field to report the indication information through the assistance information UAI. See the following examples.

In some possible implementations, the indication information may include the first priority corresponding to the first type of measurement gaps, such as the priority level.

In the embodiment of the present disclosure, the user equipment 101 reports the indication information to the network device 102 through the RRC message, thereby indicating the first priority of the MUSIM Gap preferred by the user equipment itself.

The embodiment of the present disclosure provides a method for sending indication information, which is performed by the user equipment 101 supporting MUSIM. The method includes step S301', specifically:
step S301', the user equipment 101 sends an RRC message to the network device 102, and the RRC message includes indication information. The indication information includes the first priority of the first type of measurement gaps, and the first priority is used by the network device to determine the second priority of the first type of measurement gaps, and the first type of measurement gaps is used for the measurement of the second network in the MUSIM scenario.

The RRC message includes a first field for indicating the indication information.

In some possible implementations, the RRC message is taken as assistance information UAI as an example for explanation, and the first field can be a newly added field in the assistance information UAI, which is used to report the first priority of MUSIM Gap.

Alternatively, the first field may also reuse the original priority indication field in the RRC message introduced by R17, and add the original field in the UAI, to report the first priority of MUSIM Gap. Please refer to the description of the following embodiments.

In the embodiment of the present disclosure, the user equipment 101 may report the first priority of MUSIM Gap through a new RRC message.

The embodiment of the present disclosure provides a method for sending indication information, which is performed by the user equipment 101 supporting MUSIM. The method includes step S301, specifically:
step S301, the user equipment 101 sends indication information to a network device 102, wherein the indication information includes a first priority of a first type of measurement gaps, the first priority is used by the network device to determine a second priority of the first type of measurement gaps, the first type of measurement gaps is used for the measurement of a second network in an MUSIM scenario.

The indication information includes: in one or more of the first type of measurement gaps, the first priority of each of the first type of measurement gaps.

In this implementation, the indication information is used to indicate: the relative priority of the first type of measurement gaps MUSIM Gap, that is, the first priority of each MUSIM Gap in all MUSIM Gaps.

In some possible implementations, the user equipment 101 may send the indication information through an RRC message, such as sending the indication information through the assistance information UAI.

In some possible implementations, the RRC message includes a first field for indicating the indication information.

Taking the RRC message as the assistance information UAI as an example, the first field may be a newly added field in UAI, which is specifically used to indicate the first priority of MUSIM Gap; or it can reuse an original priority indication field within the RRC message introduced by R17, that is, adding the original priority indication field within the UAI, to indicate the first priority of the MUSIM Gap.

To facilitate understanding of the embodiment of the present disclosure, a specific example is listed below.

### Example 1:

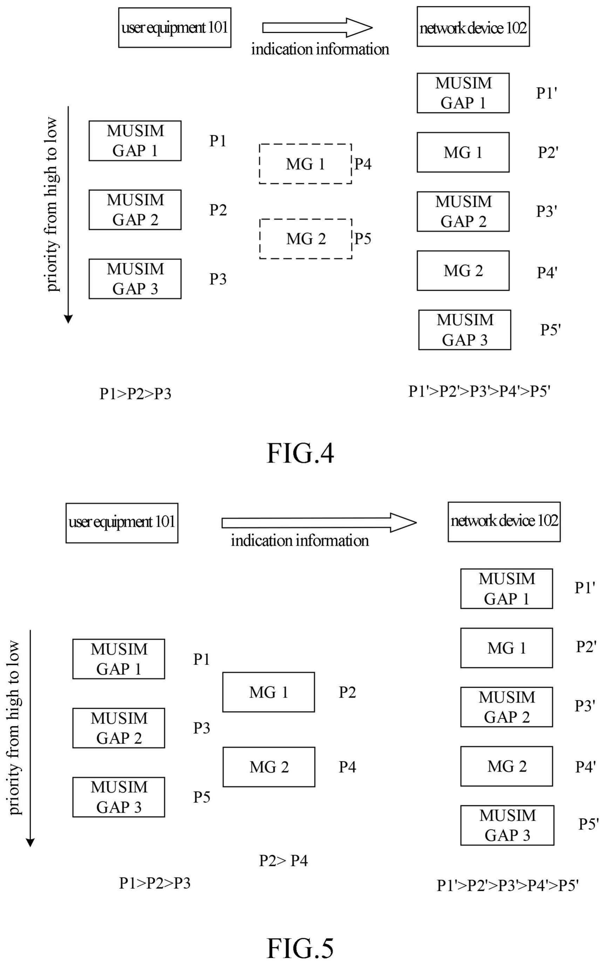

In combination with the schematic diagram of FIG. 4, the plurality of first type of measurement gaps are MUSIM Gap1, MUSIM Gap2 and MUSIM Gap3, respectively.

The user equipment 101 determines its preferred first priorities corresponding to the three gaps.

For example, the three first type of measurement gaps are ranked from high to low according to the first priority are: MUSIM Gap1 with a first priority of P1, MUSIM Gap2 with a first priority of P2, and MUSIM Gap3 with a first priority of P3, wherein P1>P2>P3.

The user equipment 101 may use the first field newly added in the UAI to report the indication information.

For example, the fields of UAI in the R17 protocol version include:

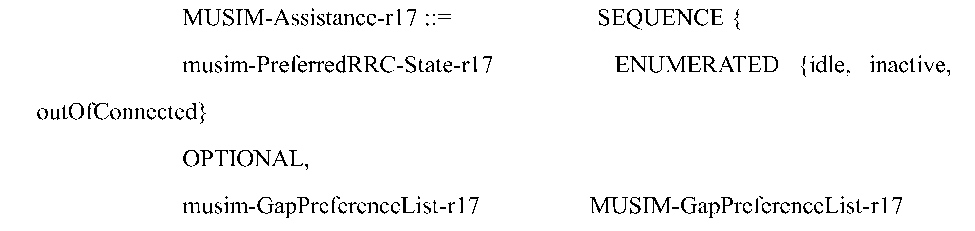

In this example, a first field is newly added to UAI, and the first field may include the following three parts:

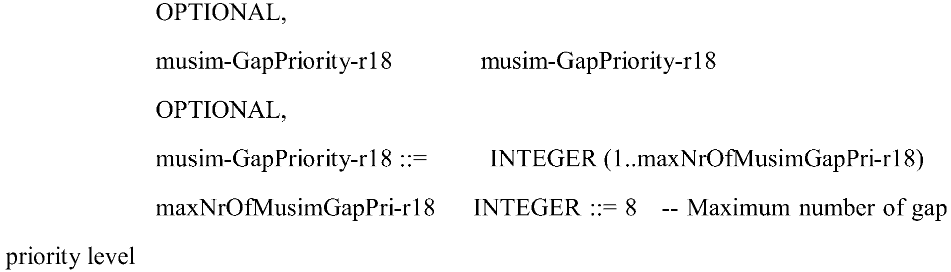

When maxNrOfMusimGapPri-r18 takes the value of 8, the field INTEGER (1..maxNrOfMusimGapPri-r18), i.e., (1..8) is used to indicate that the user equipment 101 can at most report 8 first priorities, and the 8 first priorities correspond to the corresponding MUSIM Gap in turn, that is, the user equipment 101 can at most report first priorities corresponding to 8 MUSIM Gaps.

For example, when the user equipment 101 reports (P1, P2, P3), P1 corresponds to MUSIM Gap1, P2 corresponds to MUSIM Gap2, and P3 corresponds to MUSIM Gap3, and the first priority is still taken from high to low as an example, that is, P1>P2>P3.

After receiving the indication information, the network device 102 combines the first priorities of a plurality of first type of measurement gaps and the priorities of the relevant measurement gaps (such as first type of measurement gaps and second type of measurement gaps) at the network device 102, to configure the final priorities of first type of measurement gaps.

For example, as shown in FIG. 4, the second configuration information indicates the second priority: (P1', P2', P3', P4', P5'), and the order still satisfies the priority from high to low, that is, P1'>P2'>P3'>P4'>P5'. P1' corresponds to MUSIM Gap1, P2' corresponds to MG1, P3' corresponds to MUSIM Gap2, P4' corresponds to MG2, and P5' corresponds to MUSIM Gap3.

In the embodiment of the present disclosure, the user equipment 101 can report its preferred relative priority of the MUSIM Gap through the assistance information UAI, so that the network device 102 can reasonably configure the second priority of MUSIM Gap in all relevant measurement gaps in combination with the priorities of other measurement gaps after receiving the indication information.

The embodiment of the present disclosure provides a method for sending indication information, which is performed by the user equipment 101 supporting MUSIM. The method includes step S301, specifically:

step S301, the user equipment 101 sends indication information to a network device 102, wherein the indication information includes a first priority of a first type of measurement gaps, the first priority is used by the network device to determine a second priority of the first type of measurement gaps, the first type of measurement gaps is used for the measurement of a second network in an MUSIM scenario.

The indication information includes: the first priority of each of the first type of measurement gaps in one or more of the first type of measurement gaps and one or more of a second type of measurement gaps.

The second type of measurement gaps is used for the measurement purpose under the first network.

In some possible implementations, the measurement purpose may include any one or more of the following: cell selection/cell reselection, paging message reception, reading system messages, etc.

In this implementation, the indication information is used to indicate: the absolute priority of the first type of measurement gaps MUSIM Gap, that is, the first priority of each MUSIM Gap in all Gaps (the first measurement gaps and the second measurement gaps).

In some possible implementations, the second type of measurement gaps includes all measurement gaps MG introduced by R16~R18 for the first network.

For example, the second type of measurement gaps includes: Preconfigured Measurement Gap, concurrent measurement gap (Concurrent Gap), and network controlled small gap (NCSG), etc.

In one example, when the measurement purpose is cell selection or cell reselection, the user equipment 101 can, according to relevant instructions of the source cell under NW A, perform measurements of inter-frequency candidate cells under NW A according to the second type of measurement gaps.

In some possible implementations, the user equipment 101 can send the indication information through an RRC message, such as sending the indication information through assistance information UAI.

In some possible implementations, the RRC message includes a first field for indicating the indication information.

Taking the RRC message as the UAI as an example, the first field may be a newly added field in UAI, which is specifically used to indicate the first priority of MUSIM Gap; or it can reuse an original priority indication field within the RRC message introduced by R17, that is, adding the original priority indication field within the UAI, to indicate the first priority of the MUSIM Gap.

To facilitate understanding of the embodiment of the present disclosure, a specific example is listed below.

### Example 2:

In combination with the schematic diagram of FIG. 5, the plurality of first type of measurement gaps are MUSIM Gap1, MUSIM Gap2 and MUSIM Gap3, respectively, and the plurality of second type of measurement gaps are MG1 and MG2, respectively. The third priorities corresponding to MG1 and MG2 are configured by the network device 102 through the first configuration information.

The user equipment 101 determines its preferred first priority of each of the first type of measurement gaps among all measurement gaps.

For example, the user equipment 101 combines the third priority P2 of MG1 configured by the network device 102, and the third priority P4 of MG2, to determine that the first priority corresponding to MUSIM Gap1 is P1, the first priority corresponding to MUSIM Gap2 is P3, and the first priority corresponding to MUSIM Gap3 is P5. Among them, P1>P2 >P3>P4>P5.

The user equipment 101 can use the original first field in the RRC message introduced by R17 to report the indication information.

For example, the fields of UAI in the R17 protocol version include:

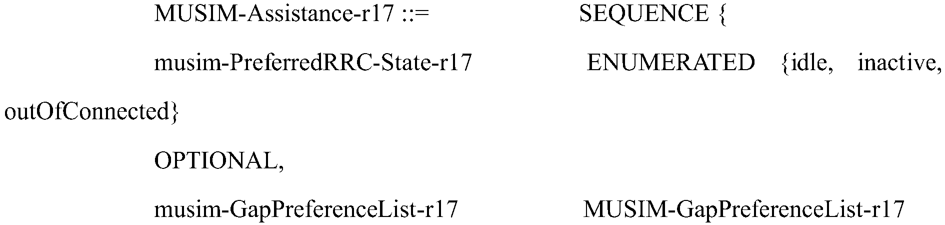

The UAI also adds the following musim-GapPriority-r18 field, and the field GapPriority-r17 pointed to by musim-GapPriority-r18 is the original field of the RRC message introduced by R17, that is, the first field.

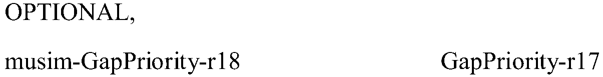

In this example, the first field GapPriority-r17 indicating the priority of the measurement gap is reused, to indicate the absolute priority of the first measurement gap in the MUSIM scenario. That is, the first field is used to report the indication information through UAI.

When reporting, the user equipment 101 can still report in the form of (P1, P2, P3, P4, P5), where P1 corresponds to MUSIM Gap1, P2 corresponds to MG1, P3 corresponds to MUSIM Gap2, P4 corresponds to MG2, and P5 corresponds to MUSIM Gap3, and the first priority is still taken from high to low as an example, that is, P1>P2>P3>P4>P5.

After receiving the indication information, the network device 102 combines the first priorities of a plurality of first type of measurement gaps and the third priority of the second type of measurement gaps, to configure the final second priority of the first type of measurement gaps. It can be understood that the third priority is used to indicate the priority or initial priority configured by the network device 102 for the MG before determining the second priority. The first priority, the second priority, and the third priority are only used for differentiation, there are correlations among them, and they may be the same in some cases. The names of the three priorities should not limit the relevant schemes.

For example, as shown in FIG. 5, the second configuration information indicates the second priority: (P1', P2', P3', P4', P5'), and the order still satisfies the second priority from high to low, that is, P1'>P2'>P3'>P4'>P5'. P1' corresponds to MUSIM Gap1, P2' corresponds to MG1, P3' corresponds to MUSIM Gap2, P4' corresponds to MG2, and P5' corresponds to MUSIM Gap3.

In the embodiment of the present disclosure, the user equipment 101 can report its preferred absolute priority of the MUSIM Gap through the assistance information UAI, so that the network device 102 can reasonably configure the priority of MUSIM Gap in all relevant measurement gaps in combination with the priorities of other measurement gaps after receiving the indication information.

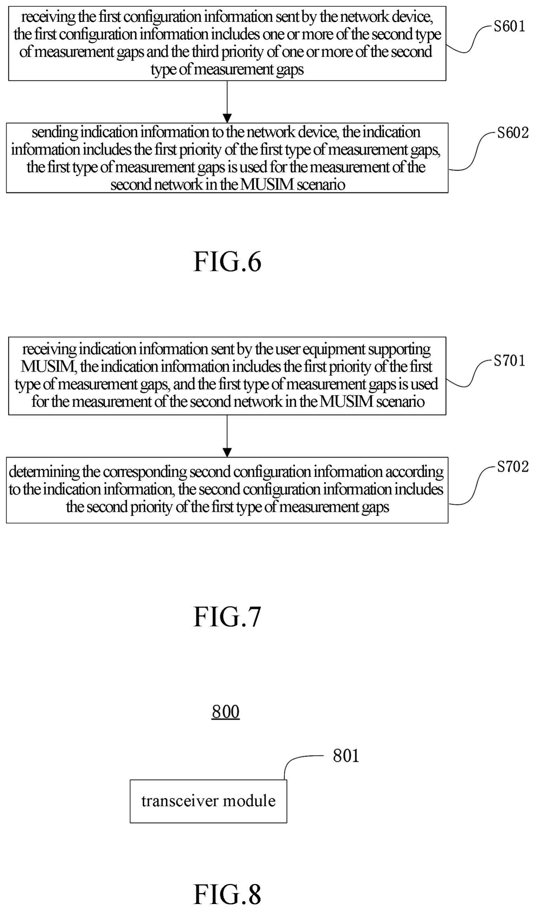

The embodiment of the present disclosure provides a method for sending indication information, which is performed by the user equipment 101 supporting MUSIM. Referring to FIG. 6, FIG. 6 is a method for sending indication information according to an example embodiment. As shown in FIG. 6, the method includes steps S601 to S602, specifically:

step S601, the user equipment 101 receives the first configuration information sent by the network device 102, the first configuration information includes one or more of the second type of measurement gaps and the third priority of one or more of the second type of measurement gaps, wherein the first configuration information is used for the user equipment to determine the indication information.

Step S602, the user equipment 101 sends indication information to the network device 102, the indication information includes the first priority of the first type of measurement gaps, the first priority is used by the network device to determine the second priority of the first type of measurement gaps, and the first type of measurement gaps is used for the measurement of the second network in the MUSIM scenario.

The indication information includes: the first priority of each of the first type of measurement gaps in one or more of the first type of measurement gaps and one or more of a second type of measurement gaps. That is, the indication information is used to indicate: the absolute priority of the first type of measurement gaps MUSIM Gap, that is, the first priority of each MUSIM Gap in all Gaps (the first measurement gaps and the second measurement gaps).

The description of the embodiment of the present disclosure can refer to the implementation corresponding to the aforementioned embodiment such as FIG. 5, which is not fully repeated here.

In the embodiment of the present disclosure, the user equipment 101 can determine the absolute priority of the first type of measurement gaps that it prefers in combination with each second type of measurement gaps MG in the first configuration information of the network device 102.

The embodiment of the present disclosure provides a method for sending indication information, which is performed by the user equipment 101 supporting MUSIM. The method includes steps S301~S302, specifically:
step S301, the user equipment 101 sends indication information to the network device 102, the indication information includes the first priority of the first type of measurement gaps, and the first type of measurement gaps is used for the measurement of the second network in the MUSIM scenario.

Step S302, the user equipment 101 receives the second configuration information sent by the network device 102, the second configuration information includes the second priority of the first type of measurement gaps, wherein the second configuration information is determined by the network device according to the indication information.

In the embodiment of the present disclosure, after reporting the indication information, the user equipment 101 can receive the second configuration information configured by the network device 102 according to the indication information, to obtain the measurement gap configuration that meets its own needs.

The embodiment of the present disclosure provides a method for sending indication information, which is performed by the user equipment 101 supporting MUSIM. The method includes steps S301 to S303, specifically:
step S301, the user equipment 101 sends indication information to a network device 102, wherein the indication information includes a first priority of a first type of measurement gaps, the first priority is used by the network device to determine a second priority of the first type of measurement gaps, the first type of measurement gaps is used for the measurement of a second network in an MUSIM scenario.

Step S302, the user equipment 101 receives the second configuration information sent by the network device 102, the second configuration information includes the second priority of the first type of measurement gaps, wherein the second configuration information is determined by the network device according to the indication information.

Step S303, the user equipment 101 performs the measurement of the second network according to the second configuration information.

In some possible implementations, the measurement of the second network may include: measuring the reference signal of the cell under the second network, such as measuring the reference signal received power of the reference signal.

In some possible implementations, in combination with the second priority of the first type of measurement gaps in the second configuration information, in the scenario where time-domain conflicts occur among measurement gaps, the user equipment 101 can perform the corresponding measurement according to the measurement gap with the highest priority.

In one example:
the second configuration information indicates the following information: the second priority of each measurement gap satisfies P1'>P2'>P3'>P4'>P5' from high to low, where P1' corresponds to MUSIM Gap1, P2' corresponds to MG1, P3' corresponds to MUSIM Gap2, P4' corresponds to MG2, and P5' corresponds to MUSIM Gap3.

When time-domain conflict occurs between any two or more of MUSIM Gap1, MUSIM Gap2, MUSIM Gap3, MG1, and MG2, the measurement of the measurement gap with the highest priority is performed.

For example, the measurement of the second network is performed in MUSIM Gap1.

In the embodiment of the present disclosure, the user equipment 101 can perform the measurement corresponding to the measurement gap with the highest priority in the scenario where the measurement gaps conflict according to the measurement gap priority configured by the network device 102, which is conducive to effective measurement in the scenario where different measurement gaps conflict.

The embodiment of the present disclosure provides a method for receiving indication information, which is performed by the network device 102. Referring to FIG. 7, FIG. 7 is a method for receiving indication information according to an example embodiment. As shown in FIG. 7, the method includes steps S701 to S702. Specifically:
step S701, the network device 102 receives indication information sent by the user equipment 101 supporting MUSIM, the indication information includes the first priority of the first type of measurement gaps, and the first type of measurement gaps is used for the measurement of the second network in the MUSIM scenario.

In some possible implementations, the network device 102 corresponds to the first network, that is, network A (NW A). The second network is, for example, network B (NW B).

In some possible implementations, the user equipment 101 is in an RRC connected state in the first network, that is, NW A, and in an RRC idle state or an RRC inactive state in the second network, that is, NW B.

Step S702, the network device 102 determines the second configuration information according to the indication information, the second configuration information includes the second priority of the first type of measurement gaps.

In some possible implementations, the second priority of the MUSIM Gap configured in the second configuration information determined by the network device 102 may be the same as or different from the first priority of the MUSIM Gap preferred by the user equipment 101.

In some possible implementations, the network device 102 can at most configure three periodic MUSIM Gaps and one non-periodic MUSIM gap at the same time.

In some possible implementations, the network device 102 considers the second type of measurement gaps (MG) used for the first network NW A measurement according to the first priority of the MUSIM gap reported by the user equipment 101, and determines the second configuration information including the second priority of the MUSIM gap and the second priority of the MG.

In the embodiment of the present disclosure, the network device 102 receives the indication information sent by the user equipment 101 to learn the first priority of the first type of measurement gaps preferred by the user equipment 101. Thus, the network device 102 can perform reasonable measurement gap configuration according to the indication information, which is conducive to effective measurement in scenarios where different measurement gaps conflict.

The embodiment of the present disclosure provides a method for receiving indication information, which is performed by the network device 102. The method includes steps S701'~S702, specifically:
step S701', the network device 102 receives the RRC message sent by the user equipment 101 supporting MUSIM, and determines the indication information according to the first field in the RRC message.

The indication information includes the first priority of the first type of measurement gaps, and the first type of measurement gaps is used for the measurement of the second network in the MUSIM scenario.

In some possible implementations, the network device 102 can receive the assistance information UAI sent by the user equipment 101, and the UAI directly or implicitly indicates the first priority. For example, the description of the aforementioned embodiments can be referred to, which is not fully described here.

In some possible implementations, the first field may be a newly added field in the assistance information UAI, which is specifically used to indicate the first priority of MUSIM Gap; or it can reuse an original priority indication field within the RRC message introduced by R17, that is, adding the original priority indication field within the UAI, to indicate the first priority of the MUSIM Gap.

Step S702, the network device 102 determines the second configuration information according to the indication information, and the second configuration information includes the second priority of the first type of measurement gaps.

In the embodiment of the present disclosure, the user equipment 101 can report the first priority of MUSIM Gap through a new RRC message. Therefore, after receiving the indication information, the network device 102 can combine the priorities of other measurement gaps, to reasonably configure the priority of MUSIM Gap in all relevant measurement gaps.

The embodiment of the present disclosure provides a method for receiving indication information, which is performed by the network device 102. The method includes steps S701~S702, specifically:
step S701, the network device 102 receives indication information sent by the user equipment 101 supporting MUSIM, the indication information includes the first priority of the first type of measurement gaps, and the first type of measurement gaps is used for the measurement of the second network in the MUSIM scenario.

Step S702, the network device 102 determines the second configuration information according to the indication information, and the second configuration information includes the second priority of the first type of measurement gaps.

The second configuration information includes: the second priority of each of the first type of measurement gaps in one or more of the first type of measurement gaps.

In some possible implementations, the first priority may be the relative priority of the first type of measurement gaps MUSIM Gap reported by the user equipment 101. The network device 102 may only configure the corresponding second priority between the first type of measurement gaps according to the first priority.

In the embodiment of the present disclosure, the network device 102 may configure the second priority corresponding to the first type of measurement gaps in combination with the indication information.

The embodiment of the present disclosure provides a method for receiving indication information, which is performed by the network device 102. The method includes steps S701~S702, specifically:
step S701, the network device 102 receives indication information sent by the user equipment 101 supporting MUSIM, the indication information includes the first priority of the first type of measurement gaps, and the first type of measurement gaps is used for the measurement of the second network in the MUSIM scenario.

Step S702, the network device 102 determines the second configuration information according to the indication information, and the second configuration information includes the second priority of the first type of measurement gaps.

The second configuration information includes: the second priority of each of the first type of measurement gaps in one or more of the first type of measurement gaps and one or more of a second type of measurement gaps.

In some possible implementations, the first priority may be the relative priority of the first type of measurement gaps MUSIM Gap reported by the user equipment 101. The network device 102 configures the corresponding second priority of the first type of measurement gaps in all MUSIM Gaps according to the first priority.

This implementation can refer to the description corresponding to the above-mentioned embodiment such as FIG. 4, which will not be repeated here.

In some possible implementations, the first priority may be the absolute priority of the first type of measurement gaps MUSIM Gap reported by the user equipment 101. The network device 102 configures the corresponding second priority of the first type of measurement gaps in all measurement gaps according to the first priority.

This implementation can refer to the description corresponding to the above embodiment as shown in FIG. 5, and will not be repeated here.

In some possible implementations, the second configuration information may include not only the second priority corresponding to each measurement gap. It may also include: the identification (ID) of the measurement gap, the period of the measurement gap, the measurement duration of the measurement gap and other information.

In the embodiment of the present disclosure, the network device 102 can perform reasonable measurement gap configuration according to the indication information, which is conducive to the UE to perform effective measurement in the scenario where different measurement gaps conflict.

The embodiment of the present disclosure provides a method for receiving indication information, which is performed by the network device 102. The method includes steps S700~S702, specifically:
step S700, the network device 102 sends the first configuration information to the user equipment 101, the first configuration information includes one or more of the second type of measurement gaps and third priorities of one or more of the second type of measurement gaps, wherein the second type of measurement gaps is used for measurement purposes under the first network.

The third priority corresponds to the configuration of the network device 102 before determining the second priority.

Step S701, the network device 102 receives indication information sent by the user equipment 101 supporting MUSIM, the indication information includes the first priority of the first type of measurement gaps, and the first type of measurement gaps is used for the measurement of the second network in the MUSIM scenario.

Step S702, the network device 102 determines the second configuration information according to the indication information, and the second configuration information includes the second priority of the first type of measurement gaps.

The description of the embodiment of the present disclosure can refer to the implementation corresponding to the above embodiment such as FIG. 5, which is not fully described here.

In the embodiment of the present disclosure, before determining the second configuration information, the network device 102 may have configured the third priority corresponding to the second type of measurement gaps, so that the user equipment 101 can determine its preferred first priority and complete the reporting of the indication information.

The embodiment of the present disclosure provides a method for receiving indication information, which is performed by the network device 102. The method includes steps S701 to S703, specifically:
step S701, the network device 102 receives indication information sent by the user equipment 101 supporting MUSIM, the indication information includes the first priority of the first type of measurement gaps, and the first type of measurement gaps is used for the measurement of the second network in the MUSIM scenario.

Step S702, the network device 102 determines the second configuration information according to the indication information, and the second configuration information includes the second priority of the first type of measurement gaps.

Step S703, the network device 102 sends the second configuration information to the user equipment 101.

In the embodiment of the present disclosure, the network device 102 sends the second configuration information determined according to the indication information to the user equipment 101, so that the user equipment 101 can perform the measurement corresponding to the measurement gap with the highest priority in the scenario where the measurement gaps conflict, according to the second priority of the measurement gap configured by the network device 102, thereby solving the UE measurement in the scenario where different measurement gaps conflict.

Based on the same concept as the above method embodiments, the embodiment of the present disclosure also provides an apparatus for sending indication information, the apparatus may have the function of the user equipment 101 in the above method embodiments, and may be used to execute the steps performed by the user equipment 101 provided in the above method embodiments. The function may be implemented by hardware, or by software or hardware executing corresponding software. The hardware or software includes one or more modules corresponding to the above functions.

In a possible implementation, the apparatus 800 shown in FIG. 8 may be used as the user equipment 101 involved in the above method embodiments, and execute the steps performed by the user equipment 101 in the above method embodiments. As shown in FIG. 8, the apparatus 800 may include a transceiver module 801, wherein the transceiver module 801 may be used to support the communication apparatus to communicate.

When executing the steps implemented by the user equipment 101, the transceiver module 801 is configured to send indication information to a network device, wherein the indication information includes a first priority of a first type of measurement gaps, the first priority is used by the network device to determine a second priority of the first type of measurement gaps, the first type of measurement gaps is used for the measurement of a second network in an MUSIM scenario.

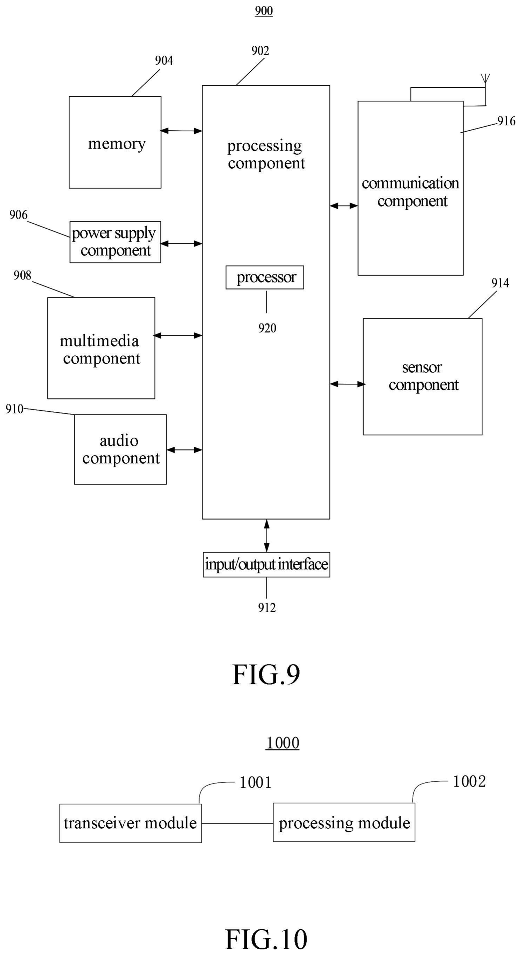

When the apparatus for receiving configuration information is the user equipment 101, its structure may also be shown in FIG. 9. The apparatus 900 may be a mobile phone, a computer, a digital broadcast terminal, a messaging device, a game console, a tablet device, a medical device, a fitness device, a personal digital assistant, etc.

Referring to FIG. 9, the apparatus 900 may include at least one or more of the following components: a processing component 902, a memory 904, a power supply component 906, a multimedia component 908, an audio component 910, an input/output (I/O) interface 912, a sensor component 914, and a communication component 916.

The processing component 902 typically controls the overall operations of the apparatus 900, such as the operations associated with display, telephone calls, data communications, camera operations, and recording operations. The processing component 902 can include one or more processors 920 to execute instructions to perform all or part of the steps in the above described methods. Moreover, the processing component 902 can include one or more modules to facilitate the interaction between the processing component 902 and other components. For example, the processing component 902 can include a multimedia module to facilitate the interaction between the multimedia component 908 and the processing component 902.

The memory 904 is configured to store various types of data to support the operation of the apparatus 900. Examples of such data include instructions for any application or method operated on the apparatus 900, the contact data, the phone book data, messages, pictures, videos, and the like. The memory 904 can be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 906 provides power to various components of the apparatus 900. The power supply component 906 can include a power management system, one or more power sources, and other components associated with the generation, management, and distribution of power for the apparatus 900.

The multimedia component 908 includes a screen providing an output interface between the apparatus 900 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors may not only sense a boundary of a touch or swipe action, but also detect the duration time and pressure associated with the touch or swipe action. In some embodiments, the multimedia component 908 includes a front camera and/or a rear camera. When the apparatus 900 is in an operation mode, such as a photographing mode or a video mode, the front camera and/or the rear camera can receive external multimedia data. Each of the front camera and the rear camera may be a fixed optical lens system or have focus and optical zoom capability.

The audio component 910 is configured to output and/or input an audio signal. For example, the audio component 910 includes a microphone (MIC) configured to receive an external audio signal when the apparatus 900 is in an operation mode, such as a call mode, a recording mode, and a voice recognition mode. The received audio signal may be further stored in the memory 904 or sent via the communication component 916. In some embodiments, the audio component 910 also includes a speaker for outputting the audio signal.

The I/O interface 912 provides an interface between the processing component 902 and peripheral interface modules, such as keyboards, a click wheels, buttons, and the like. These buttons may include, but not limited to, a home button, a volume button, a starting button, and a locking button.

The sensor component 914 includes one or more sensors for providing state assessments of various aspects of the apparatus 900. For example, the sensor component 914 can detect an open/closed state of the apparatus 900, relative positioning of components, such as the display and the keypad of the apparatus 900. The sensor component 914 can also detect a change in position of one component of the apparatus 900 or the apparatus 900, the presence or absence of user contact with the apparatus 900, an orientation, or an acceleration/deceleration of the apparatus 900, and a change in temperature of the apparatus 900. The sensor component 914 can also include a proximity sensor configured to detect the presence of nearby objects without any physical contact. The sensor component 914 can also include a light sensor, such as a CMOS or CCD image sensor, configured to use in imaging applications. In some embodiments, the sensor component 914 can also include an accelerometer sensor, a gyroscope sensor, a magnetic sensor, a pressure sensor, or a temperature sensor.

The communication component 916 is configured to facilitate wired or wireless communication between the apparatus 900 and other devices. The apparatus 900 can access a wireless network based on a communication standard, such as WiFi, 2G, 3G, or a combination thereof. In an example embodiment, the communication component 916 receives broadcast signals or broadcast associated information from an external broadcast management system via a broadcast channel. In an example embodiment, the communication component 916 also includes a near field communication (NFC) module to facilitate short-range communications. For example, the NFC module can be implemented based on radio frequency identification (RFID) technology, infrared data association (IrDA) technology, ultra-wideband (UWB) technology, Bluetooth (BT) technology and other technologies.

In an example embodiment, the apparatus 900 may be implemented with one or more application specific integrated circuits (ASIC), digital signal processors (DSP), digital signal processing devices (DSPD), programmable logic devices (PLD), field programmable Gate arrays (FPGA), controllers, microcontrollers, microprocessors or other electronic components, to perform the above methods.

In an example embodiment, a non-transitory computer-readable storage medium including instructions is also provided, such as a memory 904 including instructions, and the above instructions can be performed by the processor 920 of the apparatus 900 to complete the above method. For example, the non-transitory computer-readable storage medium can be a ROM, a random access memory (RAM), a CD-ROM, a magnetic tape, a floppy disk, and an optical data storage device.

Based on the same concept as the above method embodiments, embodiments of the present disclosure also provide an apparatus for receiving indication information, which may have the function of the network device 102 in the above method embodiments, and may be used to execute the steps performed by the network device 102 provided by the above method embodiments. The function may be implemented by hardware, or by software or hardware executing the corresponding software. The hardware or software includes one or more modules corresponding to the above functions.

In a possible implementation, the apparatus 1000 shown in FIG. 10 may be used as the network device 102 involved in the above method embodiments, and execute the steps performed by the network device 102 in the above method embodiments. As shown in FIG. 10, the apparatus 1000 may include a transceiver module 1001 and a processing module 1002 that are mutually coupled, wherein the transceiver module 1001 may be used to support the communication apparatus to communicate. The processing module 1002 may be used for the communication apparatus to perform processing operations, such as generating information/messages that need(s) to be sent, or processing received signals to obtain information/messages.

When executing the steps implemented by the network device 102, the transceiver module 1001 is configured to receive indication information sent by a user equipment supporting MUSIM, wherein the indication information includes a first priority of a first type of measurement gaps, the first type of measurement gaps is used for the measurement of a second network in an MUSIM scenario.

The processing module 1002 is configured to determine second configuration information according to the indication information, wherein the second configuration information includes a second priority of the first type of measurement gaps.

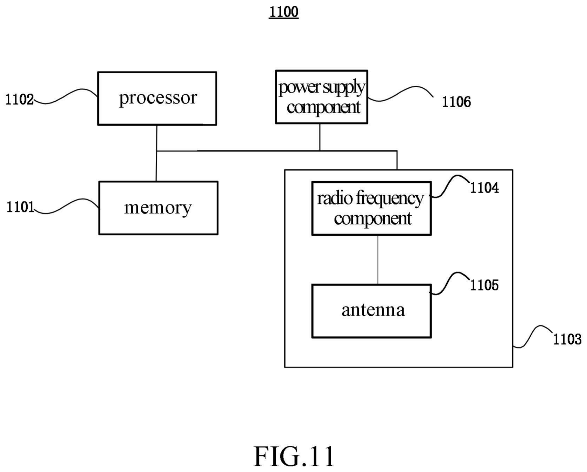

When the communication apparatus is a network device 102, its structure may also be as shown in FIG. 11. The structure of the communication apparatus is described by taking a base station as an example. As shown in FIG. 11, the apparatus 1100 includes a memory 1101, a processor 1102, a transceiver component 1103, and a power supply component 1106. The memory 1101 is coupled to the processor 1102, and can be used to store the programs and data necessary for the communication apparatus 1100 to implement various functions. The processor 1102 is configured to support the communication apparatus 1100 to perform the corresponding functions in the above methods, and the functions can be implemented by invoking the programs stored in the memory 1101. The transceiver component 1103 may be a wireless transceiver, which may be used to support the communication apparatus 1100 to receive signaling and/or data through a wireless air interface, and to send signaling and/or data. The transceiver component 1103 may also be referred to as a transceiver unit or a communication unit. The transceiver component 1103 may include a radio frequency component 1104 and one or more antennas 1105, wherein the radio frequency component 1104 may be a remote radio unit (RRU), which may be used for transmission of radio frequency signals and conversion between radio frequency signals and baseband signals, and the one or more antennas 1105 may be used to radiate and receive radio frequency signals.

When the communication apparatus 1100 needs to send data, the processor 1102 may perform baseband processing on the data to be sent, and then output the baseband signal to the radio frequency unit. The radio frequency unit performs radio frequency processing on the baseband signal and then sends the radio frequency signal through the antenna in the form of electromagnetic waves. When data is sent to the communication apparatus 1100, the radio frequency unit receives the radio frequency signal through the antenna, converts the radio frequency signal into a baseband signal, and outputs the baseband signal to the processor 1102, and the processor 1102 converts the baseband signal into data and processes the data.

Other implementations of embodiments of the present disclosure will easily occur to those skilled in the art after considering the specification and practicing the invention disclosed herein. The present disclosure is intended to cover any variation, use or adaptation of embodiments of the present disclosure, which follows the general principles of embodiments of the present disclosure and includes common sense or common technical means in the technical field not disclosed in this disclosure. The specification and embodiments are to be regarded as exemplary only, and the true scope and spirit of embodiments of the present disclosure are indicated by the following claims.

It should be understood that embodiments of the present disclosure are not limited to the precise structure described above and shown in the drawings, and various modifications and changes can be made without departing from its scope. The scope of embodiments of the present disclosure is limited only by the appended claims.

## Claims

1. A method for sending indication information, performed by a user equipment supporting a multi-universal subscriber identity module MUSIM, the method comprising:
sending indication information to a network device, wherein the indication information comprises a first priority of a first type of measurement gaps, the first priority is used by the network device to determine a second priority of the first type of measurement gaps, the first type of measurement gaps is used for measurement of a second network in an MUSIM scenario.

2. The method according to claim 1, wherein sending indication information to a network device comprises:
sending a radio resource control RRC message to the network device, wherein the RRC message comprises the indication information.

3. The method according to claim 2, wherein the RRC message comprises a first field for indicating the indication information.

4. The method according to any one of claims 1 to 3, wherein the indication information comprises: among one or more of the first type of measurement gaps, the first priority of each of the first type of measurement gaps.

5. The method according to any one of claims 1 to 3, wherein the indication information comprises: among one or more of the first type of measurement gaps and one or more of a second type of measurement gaps, the first priority of each of the first type of measurement gaps;
wherein the second type of measurement gaps is used for measurement purposes under a first network.

6. The method according to claim 5, further comprising:
receiving first configuration information sent by the network device, wherein the first configuration information comprises the one or more of the second type of measurement gaps and a third priority of the one or more of the second type of measurement gaps, wherein the first configuration information is used by the user equipment to determine the indication information.

7. The method according to any one of claims 1 to 6, further comprising:
receiving second configuration information sent by the network device, wherein the second configuration information comprises the second priority of the first type of measurement gaps, wherein the second configuration information is determined by the network device according to the indication information.

8. The method according to claim 7, further comprising:
performing measurement of the second network according to the second configuration information.

9. A method for receiving indication information, performed by a network device, the method comprising:
receiving indication information sent by a user equipment supporting MUSIM, wherein the indication information comprises a first priority of a first type of measurement gaps, the first type of measurement gaps is used for measurement of a second network in an MUSIM scenario;
determining second configuration information according to the indication information, wherein the second configuration information comprises a second priority of the first type of measurement gaps.

10. The method according to claim 9, wherein receiving indication information sent by a user equipment supporting MUSIM comprises:
receiving an RRC message sent by the user equipment, and determining the indication information according to a first field in the RRC message.

11. The method according to claim 9, wherein the second configuration information comprises: among one or more of the first type of measurement gaps, the second priority of each of the first type of measurement gaps.

12. The method according to claim 9, wherein the second configuration information comprises: among one or more of the first type of measurement gaps and one or more of a second type of measurement gaps, the second priority of each of the first type of measurement gaps.

13. The method according to claim 12, further comprising:
sending first configuration information to the user equipment, wherein the first configuration information comprises the one or more of the second type of measurement gaps and a third priority of the one or more of the second type of measurement gaps, the second type of measurement gaps is used for measurement purposes under a first network.

14. The method according to any one of claims 9 to 13, further comprising:
sending the second configuration information to the user equipment.

15. An apparatus for sending indication information, configured in a user equipment supporting MUSIM, the apparatus comprising:
a transceiver module, configured to send indication information to a network device, wherein the indication information comprises a first priority of a first type of measurement gaps, the first priority is used by the network device to determine a second priority of the first type of measurement gaps, the first type of measurement gaps is used for measurement of a second network in an MUSIM scenario.

16. An apparatus for receiving indication information, configured in a network device, the apparatus comprising:
a transceiver module, configured to receive indication information sent by a user equipment supporting MUSIM, wherein the indication information comprises a first priority of a first type of measurement gaps, the first type of measurement gaps is used for measurement of a second network in an MUSIM scenario;
a processing module, configured to determine second configuration information according to the indication information, wherein the second configuration information comprises a second priority of the first type of measurement gaps.

17. A user equipment, comprising a processor and a memory, wherein:
the memory is configured for storing a computer program;
the processor is configured to execute the computer program to implement the method according to any one of claims 1 to 8.

18. A network device, comprising a processor and a memory, wherein,
the memory is configured for storing a computer program;
the processor is configured to execute the computer program to implement the method according to any one of claims 9-14.

19. A computer-readable storage medium, wherein instructions are stored in the computer-readable storage medium, the instructions cause a computer to execute the method according to any one of claims 1 to 8 when invoked and executed on a computer.

20. A computer-readable storage medium, wherein instructions are stored in the computer-readable storage medium, the instructions cause a computer to execute the method according to any one of claims 9 to 14 when invoked and executed on a computer.
